# EUROPÄISCHE PATENTSCHRIFT

(11) **EP 0 412 593 B1**
(45) Veröffentlichungstag und Bekanntmachung des Hinweises auf die Patenterteilung: **22.12.1993**
(21) Anmeldenummer: 90201984.3
(22) Anmeldetag: 20.07.1990
(51) Int. Cl.: B01D 53/36, C01B 17/04

(54) **Vorrichtung zum katalytischen Umsetzen eines H2S und SO2 enthaltenden Gasgemisches nach dem Clausverfahren**
Device for the catalytic reaction of a gas mixture containing H2S and SO2 by the Claus process
Dispositif pour la réaction catalytique d'un mélange de gaz contenant H2S et SO2 d'après le procédé Claus

(30) Priorität: 08.08.1989 DE 3926105
(43) Veröffentlichungstag der Anmeldung: 13.02.1991
(73) Patentinhaber: METALLGESELLSCHAFT Aktiengesellschaft, 60015 Frankfurt (DE)
(72) Erfinder: Fischer, Herbert, D-6304 Lollar (DE); Nehb, Wolfgang, D-6000 Frankfurt am Main (DE)

(56) Entgegenhaltungen:
- DD-A- 269 792
- DE-A- 3 708 957
- US-A- 3 393 050
- PATENT ABSTRACTS OF JAPAN vol. 12, no. 37 (C-473)(2884) 4 Februar 1988

## Beschreibung

Die Erfindung betrifft eine Vorrichtung zum katalytischen Umsetzen eines H₂S und SO₂ enthaltenden Gasgemisches nach dem Clausverfahren zu dampfförmigem Elementarschwefel mit einem Behälter, in welchem sich der Katalysator und eine Kühleinrichtung zum Kondensieren des gebildeten dampfförmigen Elementarschwefels befinden, wobei der Behälter einen Einlaß für das Gasgemisch, einen Gasauslaß und einen Ablauf für flüssigen Elementarschwefel aufweist.

Eine solche Vorrichtung ist aus US-A-3 393 050 bekannt, wobei im Behälter eine Vielzahl von Katalysatorkerzen angeordnet sind.

Der Erfindung liegt die Aufgabe zugrunde, die eingangs genannte Vorrichtung konstruktiv zu vereinfachen und den Aufwand für die Vermeidung von Undichtigkeiten möglichst gering zu halten. Erfindungsgemäß wird dies dadurch erreicht, daß die Kühleinrichtung als im Behälter zentral angeordnete Kühlkammer ausgebildet ist und sich der Katalysator für die Umsetzung des Gasgemisches in einem die Kühlkammer umgebenden Ringraum befindet, der Ringraum den Einlaß für das Gasgemisch aufweist und die Kühlkammer mindestens eine Kühlmittelleitung, einen Durchlaß für das vom Ringraum kommende Gasgemisch, den Gasauslaß und am unteren Ende den Ablauf für den flüssigen Elementarschwefel aufweist.

Bei der erfindungsgemäßen Vorrichtung kann das Gasgemisch im einen Fall im Ringraum abwärts und in der Kühlkammer aufwärts strömen oder aber man leitet es im anderen Fall zunächst aufwärts durch den Ringraum und dann abwärts durch die Kühlkammer. In beiden Fallen bildet die Außenwand der Kühlkammer die Innenwand des Ringraums, in welchem sich der Katalysator befindet. Leitungen und Flanschverbindungen zwischen dem Ringraum und der Kühlkammer entfallen, auch hat es sich gezeigt, daß der Außendurchmesser des Behälters nur wenig größer zu sein braucht als ein Behälter bekannter Konstruktion, in welchem sich der Katalysator ohne Kühlkammer befindet. Üblicherweise ist der Innendurchmesser der Außenwand des Ringraums 1,5 bis 4 mal so groß wie der Innendurchmesser der Kühlkammer.

Die Kühlkammer enthält Kühlmittelleitungen, welche durch indirekten Wärmeaustausch für die Kühlung des Elementarschwefel enthaltenden Gasgemisches sorgen, wobei der Schwefel kondensiert. Die Anordnung einer oder mehrerer Kühlmittelleitungen kann auf verschiedene Weise erfolgen. Eine konstruktiv einfache Lösung besteht darin, die Kühlkammer mit mehreren senkrechten Kühlmittelleitungen auszurüsten, wobei der verflüssigte Schwefel an der Außenseite der Leitungen nach unten abfließt. Als Kühlmittel kann man Wasser verwenden, das unter Druck siedet. Es sind aber auch andere, an sich bekannte Kühlflüssigkeiten wie z.B. organische Wärmeträgerflüssigkeiten oder Salzschmelzen möglich.

Im Behälter kann ein Druck von 1 bis 20 bar oder auch höher herrschen, wobei festzustellen ist, daß die Herstellungskosten der integrierten Vorrichtung für das Arbeiten unter erhöhtem Druck besonders günstig sind.

Ausgestaltungsmöglichkeiten der erfindungsgemäßen Vorrichtung werden mit Hilfe der Zeichnung erläutert. Es zeigt:
Fig. 1 einen Längsschnitt durch eine erste Ausführungsform und
Fig. 2 einen Längsschnitt durch eine zweite Ausführungsform.

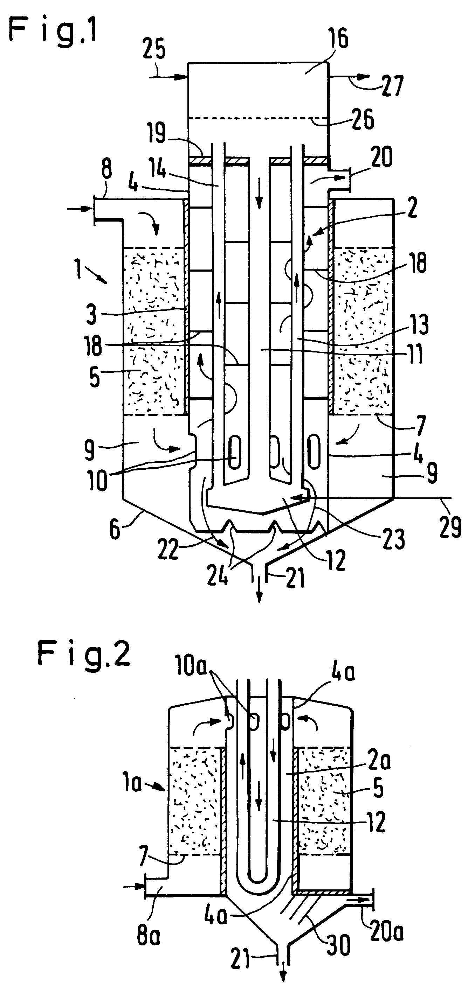

Die Hauptteile der Vorrichtung der Fig. 1 sind der zylindrische Behälter (1) und die darin angeordnete, rohrförmige Kühlkammer (2). Ein Abschnitt der rohrförmigen Wand (4) der Kühlkammer (2) ist mit einer Wärmedämmung (3), z.B. einer Ausmauerung, versehen. Im Ringraum zwischen der Außenwand des Behälters (1) und der Wärmedämmung (3) befindet sich eine Katalysatorschüttung (5), die z.B. aus körnigem Al₂O₃ oder TiO₂ besteht. Die Katalysatorschüttung stützt sich auf einem Rost (7) ab. Die Unterseite des Behälters bildet ein trichterförmiger Boden (6).

Das umzusetzende, H₂S und SO₂ enthaltende Gasgemisch tritt durch einen Einlaß (8) mit Temperaturen von etwa 180 bis 350°C in den Behälter (1) ein und strömt abwärts durch die Katalysatorschüttung (5). Am Katalysator bildet sich aus H₂S und SO₂ Elementarschwefel und Wasser, wobei auch Wärme frei wird. Vom Raum (9) unterhalb des Rostes (7) tritt das Gasgemisch, das dampfförmigen Elementarschwefel enthält, durch Durchlässe (10) in der Wand (4) in die Kühlkammer (2) ein. Die Kühlkammer enthält eine zentrale Leitung (11), in welcher Kühlwasser von einer Dampfsammelkammer (16) abwärts zu einer Verteilkammer (12) strömt, und von der Verteilkammer fließt das Kühlwasser, das sich im siedenden Zustand befindet, durch Naturumlauf durch mehrere Steigleitungen (13) und (14) aufwärts zur Dampfsammelkammer (16) zurück.

Das in der Kühlkammer (2) aufwärts strömende Gasgemisch wird durch Ringscheiben (18) zum Intensivieren des Kontakts mit den Kühlwasserleitungen mehrfach umgelenkt und verläßt die Kühlkammer (2) durch den Gasauslaß (20). Den oberen Abschluß der Kühlkammer bildet ein Rohrboden (19).

Kondensierter Elementarschwefel fließt an den Außenwänden der Kühlwasserleitungen abwärts und gelangt an der Außenseite der Verteilkammer (12) vorbei durch das untere offene Ende der Kühlkammer zu einem Ablauf (21), wie das durch die Pfeile (22) und (23) angedeutet ist. Der untere Rand der Wand (4) der Kühlkammer weist Löcher (24) auf, damit flüssiger Schwefel, der bereits im Raum (9) anfällt, ebenfalls durch den Ablauf (21) abfließen kann. In der Kühlkammer (2) wirken die Ringscheiben (18), die das aufwärts strömende Gas umlenken, als wirksame Abscheider für den flüssigen Schwefel, so daß eine zusätzliche Abscheidevorrichtung im Gasauslaß (20) oder daran anschließend nicht erforderlich ist. Die Temperatur des Gases am Auslaß (20) liegt etwa im Bereich von 150 bis 200°C. Im Ablauf (21) hat der flüssige Schwefel eine Temperatur von etwa 160 bis 170°C.

Der Dampfsammelkammer (16) speist man Kühlwasser durch die Zufuhrleitung (25) ein, das durch den Naturumlauf in die zentrale Leitung (11) eintritt. Der Wasserspiegel (26) ist durch eine punktierte Linie angedeutet. Gebildeter Wasserdampf zieht in der Leitung (27) ab.

In der Anfahrphase sind die Kühlwasserleitungen und die Verteilkammer (12) mit Kühlwasser gefüllt. Dieses Kühlwasser muß bei Betriebsbeginn soweit erwärmt sein, daß seine Temperatur über der Erstarrungstemperatur des Schwefels liegt. Zu diesem Zweck ist eine Anfahrheizung vorgesehen, die im vorliegenden Fall aus einer Einspeiseleitung (29) für Wasserdampf besteht. Diese Einspeiseleitung mündet in die Verteilkammer (12) und sorgt für eine ausreichend hohe Temperatur des Kühlwassers, bevor es der Kondensation des Elementarschwefels dient. Die Leitung (29) kann auch abweichend von der Zeichnung z.B. durch die Kammer (16) und innerhalb der zentralen Leitung (11) bis zur Verteilkammer (12) geführt werden.

Die in Fig. 2 vereinfacht dargestellte Vorrichtung weist einen Gaseinlaß (8a) auf, der sich unterhalb der Katalysatorschüttung (5) befindet. Dadurch strömt das umzusetzende Gasgemisch im Ringraum zwischen der Kühlkammer (2a) und der Außenwand des Behälters (1a) aufwärts durch den Katalysator. Das Elementarschwefel enthaltende Gasgemisch tritt durch Öffnungen (10a) durch die Wand (4a) der Kühlkammer in diese ein und strömt darin abwärts entlang der Kühlmittelleitung (12). Umlenkeinrichtungen wurden in der Kühlkammer (2a) zur Vereinfachung weggelassen. Der flüssige Elementarschwefel fließt durch den Ablauf (21) ab und das Gasgemisch verläßt den Behälter durch den Gasauslaß (20a). Ein schematisch angedeuteter Abscheider (30) sorgt dafür, daß der Gehalt an Elementarschwefel im Gas, das durch den Auslaß (20a) abströmt, gering ist.

## Patentansprüche

1. Vorrichtung zum katalytischen Umsetzen eines H₂S und SO₂ enthaltenden Gasgemisches nach dem Clausverfahren zu dampfförmigem Elementarschwefel mit einem Behälter (1, 1a), in welchem sich der Katalysator (5) und eine Kühleinrichtung zum Kondensieren des gebildeten dampfförmigen Elementarschwefels befinden, wobei der Behälter einen Einlaß (8, 8a) für das Gasgemisch, einen Gasauslaß (20, 20a) und einen Ablauf (21) für flüssigen Elementarschwefel aufweist, dadurch gekennzeichnet, daß die Kühleinrichtung als im Behälter zentral angeordnete Kühlkammer (2, 2a) ausgebildet ist und sich der Katalysator (5) für die Umsetzung des Gasgemisches in einem die Kühlkammer umgebenden Ringraum befindet, der Ringraum den Einlaß (8, 8a) für das Gasgemisch aufweist und die Kühlkammer mindestens eine Kühlmittelleitung (11, 12, 13, 14), einen Durchlaß (10, 10a) für das vom Ringraum kommende Gasgemisch, den Gasauslaß (20, 20a) und am unteren Ende den Ablauf (21) für den flüssigen Elementarschwefel aufweist.

2. Vorrichtung nach Anspruch 1, dadurch gekennzeichnet, daß die Kühlkammer (2, 2a) mehrere senkrechte Leitungen (11, 12, 13, 14) für Kühlflüssigkeit aufweist.

3. Vorrichtung nach Anspruch 1 oder 2, dadurch gekennzeichnet, daß die Kühlkammer (2, 2a) eine Verteilkammer (12) für zu- und abfließende Kühlflüssigkeit aufweist.

4. Vorrichtung nach Anspruch 1 oder einem der folgenden, dadurch gekennzeichnet, daß die Kühlkammer (2) am oberen Ende mit einer Dampfsammelkammer (16) verbunden ist und die Dampfsammelkammer eine Zufuhrleitung (25) für Kühlflüssigkeit und eine Dampfableitung (27) aufweist.

5. Vorrichtung nach Anspruch 1 oder einem der folgenden, dadurch gekennzeichnet, daß die Kühlkammer (2) Umlenkeinrichtungen (18) für das Gasgemisch aufweist.

6. Vorrichtung nach einem der Ansprüche 1 bis 5, dadurch gekennzeichnet, daß der Einlaß (8) für das Gasgemisch im oberen Bereich des Ringraums, der Durchlaß (10) für das Gasgemisch im unteren Bereich der Kühlkammer (2) und der Gasauslaß (20) im oberen Bereich der Kühlkammer angeordnet ist.

7. Vorrichtung nach einem der Ansprüche 1 bis 5, dadurch gekennzeichnet, daß der Einlaß (8a) für das Gasgemisch im unteren Bereich des Ringraums, der Durchlaß (10a) für das Gasgemisch im oberen Bereich der Kühlkammer (2a) und der Gasauslaß (20a) im unteren Bereich der Kühlkammer angeordnet ist.

8. Vorrichtung nach Anspruch 1 oder einem der folgenden, dadurch gekennzeichnet, daß der Innendurchmesser der Außenwand des Ringraums 1,5 bis 4 mal so groß wie der Innendurchmesser der Kühlkammer (2, 2a) ist.

9. Vorrichtung nach Anspruch 1 oder einem der folgenden, dadurch gekennzeichnet, daß der Behälter (1, 1a) für einen Druck von 1 bis 20 bar ausgelegt ist.

## Claims

1. An apparatus for the catalytic reaction of a gas mixture containing H₂S and SO₂ according to the Claus process to form vaporous elemental sulphur, comprising a container (1, 1a) in which are located the catalyst (5) and a cooling apparatus for condensing the resulting vaporous elemental sulphur, the container having an inlet (8, 8a) for the gas mixture, a gas outlet (20, 20a) and a drain (21) for liquid elemental sulphur, characterised in that the cooling apparatus is designed as a cooling chamber (2, 2a) centrally located in the container and the catalyst (5) for the reaction of the gas mixture is located in an annular space surrounding the cooling chamber, the annular space has the inlet (8, 8a) for the gas mixture and the cooling chamber has at least one coolant line (11, 12, 13, 14), a passage (10, 10a) for the gas mixture coming from the annular chamber, the gas outlet (20, 20a) and at the lower end the drain (21) for the liquid elemental sulphur.

2. An apparatus according to Claim 1, characterised in that the cooling chamber (2, 2a) has a plurality of vertical lines (11, 12, 13, 14) for cooling liquid.

3. An apparatus according to Claim 1 or 2, characterised in that the cooling chamber (2, 2a) has a distribution chamber (12) for incoming and outgoing cooling liquid.

4. An apparatus according to Claim 1 or one of the following Claims, characterised in that the cooling chamber (2) is connected at the upper end to a steam-collection chamber (16) and the steam-collection chamber has a feed line (25) for cooling liquid and a steam discharge line (27).

5. An apparatus according to Claim 1 or one of the following Claims, characterised in that the cooling chamber (2) has deflection means (18) for the gas mixture.

6. An apparatus according to one of Claims 1 to 5, characterised in that the inlet (8) for the gas mixture is located in the upper region of the annular space, the passage (10) for the gas mixture in the lower region of the cooling chamber (2) and the gas outlet (20) in the upper region of the cooling chamber.

7. An apparatus according to one of Claims 1 to 5, characterised in that the inlet (8a) for the gas mixture is located in the lower region of the annular space, the passage (10a) for the gas mixture in the upper region of the cooling chamber (2a) and the gas outlet (20a) in the lower region of the cooling chamber.

8. An apparatus according to Claim 1 or one of the following Claims, characterised in that the internal diameter of the outer wall of the annular space is 1.5 to 4 times as large as the internal diameter of the cooling chamber (2, 2a).

9. An apparatus according to Claim 1 or one of the following Claims, characterised in that the container (1, 1a) is designed for a pressure of 1 to 20 bar.

## Revendications

1. Dispositif pour la réaction catalytique d'un mélange gazeux contenant du H₂S et du SO₂, par le procédé Claus, pour donner du soufre élémentaire sous forme vapeur, comportant un réacteur (1, 1a) dans lequel se trouvent le catalyseur (5) et un dispositif de refroidissement destiné à condenser le soufre élémentaire formé sous forme vapeur, le réacteur comportant un orifice d'entrée (8, 8a) pour le mélange gazeux, un orifice de sortie des gaz (20, 20a) et une évacuation (21) pour le soufre élémentaire liquide, caractérisé en ce que le dispositif de refroidissement est constitué en une chambre de refroidissement (2, 2a) disposée en position centrale dans le réacteur, et le catalyseur (5) destiné à la réaction du mélange gazeux se trouve dans un espace annulaire qui entoure la chambre de refroidissement, l'espace annulaire comporte l'orifice d'entrée (8, 8a) destiné au mélange gazeux, et la chambre de refroidissement comporte au moins une conduite de réfrigérant (11, 12, 13, 14), un passage (10, 10a) pour le mélange gazeux provenant de l'espace annulaire, l'orifice de sortie des gaz (20, 20a) et, à l'extrémité inférieure, l'évacuation (21) pour le soufre élémentaire liquide.

2. Dispositif selon la revendication 1, caractérisé en ce que la chambre de refroidissement (2, 2a) comporte plusieurs conduites verticales (11, 12, 13, 14) pour le liquide de refroidissement.

3. Dispositif selon la revendication 1 ou 2, caractérisé en ce que la chambre de refroidissement (2, 2a) comporte une chambre de distribution (12) pour l'arrivée et l'évacuation du liquide de refroidissement.

4. Dispositif selon la revendication 1 ou l'une des suivantes, caractérisé en ce que la chambre de refroidissement (2) communique, par son extrémité supérieure, avec un collecteur de vapeur (16), le collecteur de vapeur comportant une conduite d'amenée (25) pour le liquide de refroidissement et une conduite d'évacuation de vapeur (27).

5. Dispositif selon la revendication 1 ou l'une des suivantes, caractérisé en ce que la chambre de refroidissement (2) comporte des dispositifs de déviation (18) pour le mélange gazeux.

6. Dispositif selon l'une des revendications 1 à 5, caractérisé en ce que l'orifice d'entrée (8) du mélange gazeux est disposé dans la partie supérieure de l'espace annulaire, le passage (10) destiné au mélange gazeux est disposé dans la partie inférieure de la chambre de refroidissement (2), et l'orifice de sortie des gaz (20) est disposé dans la partie supérieure de la chambre de refroidissement.

7. Dispositif selon l'une des revendications 1 à 5, caractérisé en ce que l'orifice d'entrée (8a) du mélange gazeux est disposé dans la partie inférieure de l'espace annulaire, le passage (10a) du mélange gazeux est disposé dans la partie supérieure de la chambre de refroidissement (2a), et l'orifice de sortie des gaz (20a) est disposé dans la partie inférieure de la chambre de refroidissement.

8. Dispositif selon la revendication 1 ou l'une des suivantes, caractérisé en ce que le diamètre intérieur de la paroi extérieure de l'espace annulaire est de 1,5 à 4 fois supérieur au diamètre intérieur de la chambre de refroidissement (2, 2a).

9. Dispositif selon la revendication 1 ou l'une des suivantes, caractérisé en ce que le réacteur (1, 1a) est conçu pour une pression de 1 à 20 bar.
